Europäisches Patentamt

European Patent Office

Office européen des brevets

(11) Veröffentlichungsnummer: **0 398 129**
**A2**

(12) **EUROPÄISCHE PATENTANMELDUNG**

(21) Anmeldenummer: 90108639.7

(22) Anmeldetag: 08.05.90

(51) Int. Cl.5: **H04Q 11/04, H04Q 3/545**

(30) Priorität: 19.05.89 DE 3916346

(43) Veröffentlichungstag der Anmeldung:
22.11.90 Patentblatt 90/47

(84) Benannte Vertragsstaaten:
**AT BE CH DE DK ES FR GB GR IT LI LU NL SE**

(71) Anmelder: **Nixdorf Computer**
**Aktiengesellschaft**
**Fürstenallee 7**
**D-4790 Paderborn(DE)**

(72) Erfinder: **Lerch, Peter, Dipl.-Ing.**
**Im Lohfeld 109**
**D-4790 Paderborn(DE)**
Erfinder: **Golbach, Hermann, Dipl.-Ing.**
**Gutenbergstrasse 5**
**D-4794 Hövelhof(DE)**

(74) Vertreter: **Schaumburg, Thoenes &**
**Englaender**
**Mauerkircherstrasse 31**
**D-8000 München 80(DE)**

(54) **Steuersystem für eine digitale Fernmeldevermittlungsanlage.**

(57) Ein Steuersystem (64) für eine Fernmeldevermittlungsanlage wertet zur Steuerung des Verbindungsaufbaus und des Verbindungsabbaus zwischen Teilnehmerstationen sowie zum Überwachen der Verbindung digitale Zeichen aus, die über Zeichengabekanäle (K1 bis K8) zwischen Teilnehmerstationen und/oder Vermittlungsanlagen und einer Steuereinrichtung (62) ausgetauscht werden. Dieser sind Vorverarbeitungsbausteine (60a bis 60d) vorgeschaltet, die an die Steuereinrichtung (62) den Verbindungsaufbau betreffende Meldungen abgeben. Das Steuersystem (64) ermöglicht die Vermittlung und Überwachung einer großen Zahl von Verbindungen, ohne daß die Rechenkapazität eines für die Steuerung zuständigen Digitalrechners erhöht werden muß.

Fig.3

EP 0 398 129 A2

Die Erfindung betrifft ein Steuersystem für eine digitale Fernmeldevermittlungsanlage zur Steuerung des Verbindungsaufbaus und des Verbindungsabbaus zwischen Teilnehmerstationen und/oder Vermittlungsanlagen sowie zur Verbindungsüberwachung durch Auswerten digitaler Zeichen, die zwischen den Teilnehmerstationen und/oder Vermittlungsanlagen und einer Steuereinrichtung über mindestens einen Zeichengabekanal ausgetauscht werden.

Derartige bekannte Steuersysteme sind zur Auswertung der digitalen Zeichen mit mindestens einem Digitalrechner ausgestattet. Infolge der schnellen Weiterentwicklung digitaler Fernmeldevermittlungsanlagen ist es möglich, eine Vielzahl von Überwachungsfunktionen für das Fernmeldenetz in ein solches Steuersystem einzubeziehen. So können empfangene Zeichen auf Verfälschung auf dem Übertragungsweg, auf Plausibilität und Störsicherheit überprüft werden. Ferner ist es möglich, einzelne Übertragungsabschnitte des Fernmeldenetzes auf Funktionstüchtigkeit zu überprüfen. Die verschiedenen Überwachungsfunktionen sowie die Funktionen des Verbindungsaufbaus und des Verbindungsabbaus sind standardisiert und in Zeichengabeprotokollen definiert. Solche Zeichengabeprotokolle sind zum Beispiel in den FTZ-Richtlinien 141R50 und 141R60 beschrieben. Durch das fortlaufende Überwachen der Verbindungen wird es möglich, gestörte Verbindungen frühzeitig zu erkennen und ein Wiederherstellen des funktionssicheren Zustands zu veranlassen. Eine andere Möglichkeit besteht darin, mängelbehaftete Verbindungen zu umgehen, indem z.B. die Steuereinrichtung andere Übertragungswege für die gewünschte Verbindung auswählt.

Zum Durchführen der Rechenprozeduren für die Überwachung wird Rechenzeit und Speicherplatz benötigt. Dies führt zu dem Problem, daß der Digitalrechner hoch belastet wird und schnell seine Kapazitätsgrenze erreicht, so daß nur eine begrenzte Zahl von Zeichengabekanälen und damit eine begrenzte Zahl von Verbindungen zu Teilnehmerstationen oder anderen Vermittlungsanlagen zugelassen ist. Infolge der schnellen Zunahme von Anschlüssen im Fernmeldenetz ist ein häufiges Umrüsten des Digitalrechners auf eine größere Rechenkapazität notwendig, wodurch die Wirtschaftlichkeit des Steuersystems vermindert wird.

Es ist Aufgabe der Erfindung, ein Steuersystem anzugeben, das die Vermittlung und Überwachung einer großen Zahl von Verbindungen durch digitale Zeichen gestattet, ohne daß die Rechenkapazität des Digitalrechners erhöht werden muß.

Diese Aufgabe wird für ein Steuersystem eingangs genannter Art dadurch gelöst, daß der Steuereinrichtung zur programmgesteuerten Überwachung mehrerer Verbindungseigenschaften Vorverarbeitungsbausteine vorgeschaltet sind, die an die Steuereinrichtung den Verbindungszustand betreffende Meldungen abgeben.

Durch die Erfindung wird die Steuereinrichtung von rechenzeitaufwendigen Überwachungsaufgaben entlastet. Diese werden nunmehr unabhängig von der Steuereinrichtung von den Vorverarbeitungsbausteinen selbsttätig übernommen. Die Vorverarbeitungsbausteine geben nur bei Auftreten von Störungen oder anderen kritischen Verbindungszuständen Meldungen an die Steuereinrichtung ab, die daraufhin geeignete Maßnahmen zum Verbindungsaufbau oder Verbindungsabbau treffen kann. Hierzu wird weniger Rechenkapazität des Digitalrechners beansprucht, so daß mehr Rechenkapazität für die Vermittlung von Verbindungen bereitgestellt werden kann, d.h. die Vermittlungsleistung höher ist. Wenn die Fernmeldevermittlungsanlage erweitert werden soll, so sind lediglich für den Anschluß entsprechender Zeichengabekanäle weitere Vorverarbeitungsbausteine vorzusehen. Ein zusätzlicher Ausbau der Rechenkapazität ist nicht notwendig, wodurch eine hohe Wirtschaftlichkeit des Steuersystems gegeben ist. Die Vorverarbeitungsbausteine arbeiten programmgesteuert. Dies bedeutet, daß bei Änderung des Zeichengabeprotokolls oder bei zusätzlichen Überwachungsaufgaben lediglich das Programm zu ändern ist. Dadurch kann das Steuersystem flexibel an verschiedene in Zeichengabeprotokollen festgelegte Vermittlungs- und Überwachungsfunktionen angepaßt werden.

Das Laden des Programms wird in einer vorteilhaften Weiterbildung der Erfindung durch die Steuereinrichtung gesteuert. Dadurch wird es möglich, den Arbeitsablauf des Vorverarbeitungsbausteins, der im Programm festgelegt ist, zu ändern. Das Programm kann dabei von einem Massenspeicher abgerufen werden, auf den die Steuereinrichtung Zugriff hat. Dadurch ist ein sehr schnelles und bequemes Laden des Programms möglich.

Bei einer anderen Weiterbildung der Erfindung ist vorgesehen, daß bei Zeichengebekänalen mit unterschiedlichen Zeichengabeprotokollen für jedes Zeichengabeprotokoll jeweils ein Programm vorgesehen ist, das abhängig vom verwendeten Zeichengabeprotokoll abgearbeitet wird.

Dadurch wird erreicht, daß die Vorverarbeitungsbausteine in einfacher Weise auf unterschiedliche Zeichengabeprotokolle einstellbar sind.

Sinnvoll ist es weiterhin, wenn mehrere Vorverarbeitungsbausteine zu einem Signalisierungsbaustein zusammengefaßt sind, der von einem Mikroprozessor gesteuert wird. Dadurch wird der schaltungstechnische Aufwand weiter verringert.

Eine bevorzugte Weiterbildung der Erfindung sieht ferner vor, daß bei mehreren an einen Signalisierungsbaustein angeschlossenen Zeichengabekanälen jedem Zeichengabekanal ein vorbestimmter Zeitabschnitt in einem festen Zeitrahmen zugeordnet ist, in dem die Zeichen verarbeitet bzw. an die Steuereinrichtung weitergeleitet werden. Durch diese Maßnahmen kann ein Signalisierungsbaustein Zeichen mehrerer Zeichengabekanäle zeitversetzt auswerten. Hierzu ist es zweckmäßig, die Zeichen eines jeden Zeichengabekanals in einem Leitungstreiberbaustein zwischenzuspeichern, bis der dem Zeichengabekanal zugeordnete Zeitabschnitt im Zeitrahmen, in dem die Auswertung der Zeichen vorgenommen wird, erreicht wird. Durch das Zwischenspeichern werden die stochastisch und zyklisch auftretenden Zeichen zuverlässig erfaßt und ohne Verfälschung an den Signalisierungsbaustein weitergegeben.

Wird der vorbestimmte Zeitabschnitt auch zum Laden verwendet, ist ein Laden im laufenden Betrieb ohne Störung der anderen Kanäle möglich.

Ein Ausführungsbeispiel der Erfindung wird im folgenden anhand der Zeichnung erläutert. Darin zeigt

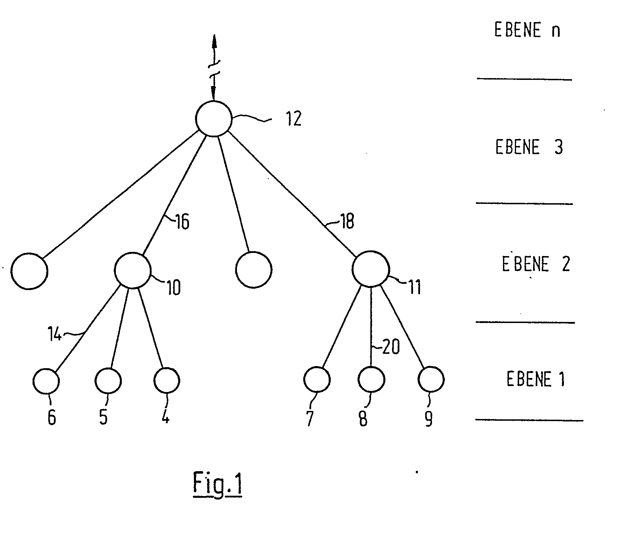

Fig. 1 den Aufbau eines digitalen Fernmeldenetzes in einer schematischen Darstellung,

Fig. 2 den prinzipiellen Aufbau einer Fernmeldevermittlungsanlage in einem Blockschaltbild,

Fig.3 ein Steuersystem mit einer Steuereinrichtung, an die mehrere Vorverarbeitungsbausteine angeschlossen sind,

Fig.4 den Aufbau eines Signalisierungsbausteins, der die Zeichen mehrerer Zeichengabekanäle auswertet, und

Fig. 5 die zeitliche Verschachtelung der Auswertung der Zeichen mehrerer Zeichengabekanäle durch einen Vorverarbeitungsbaustein.

In Fig. ist der Aufbau eines digitalen Fernmeldenetzes, auch Telekommunikationsnetz genannt, schematisch dargestellt. Das Fernmeldenetz ist hierarchisch in verschiedene Netzebenen 1 bis n gegliedert. Die Netzebene 1 wird von Teilnehmerstationen 4 bis 9 gebildet. Diese sind mit Fernmeldevermittlungsanlagen 10 bzw. 11 verbunden, die die Netzebene 2 bilden. Auch die nächsthöhere Netzebene 3 besteht aus Fernmeldevermittlungsanlagen, von denen eine Fernmeldevermittlungsanlage 12 dargestellt ist, an die die Fernmeldevermittlungsanlagen 10 und 11 angeschlossen sind.

Der sternförmige Aufbau in mehreren Ebenen wird bis zur Ebene n so lange fortgesetzt, bis sämtliche Teilnehmerstationen eines regionalen, nationalen oder internationalen Fernmeldenetzes gegenseitig über Vermittlungsanlagen verbunden werden können.

Um Informationen in Form von Sprache oder Daten, z.B. zwischen den Teilnehmerstationen 6 und 8 auszutauschen, sind vier Übertragungsabschnitte 14, 16, 18, 20 sowie drei Fernmeldevermittlungsanlagen zu durchlaufen. Zur Auswahl der richtigen Übertragungsabschnitte benötigen die Fernmeldevermittlungsanlagen 10, il, 12 Steuerinformationen, sogenannte Zeichen, die auf den Übertragungsabschnitten 14, 16, 18, 20 zusammen mit den als Informationsträger dienenden Nutzsignalen nach einem Multiplexverfahren übertragen werden. Die Zeichen umfassen Wählinformationen, die das Durchschalten einer Verbindung zur gewünschten Teilnehmerstation 6, 8 veranlassen, sowie weitere Informationen zum Verbindungsaufbau, Verbindungsabbau und zur Überwachung der Verbindung, wie zum Beispiel Quittungssignale, Prüfsignale, Initialisierunggsinformationen und Informationen zum Auf- und Abbau der Zeichengabeverbindung. Die Bedeutungen der einzelnen Zeichen sind in einem Zeichengabeprotokoll oder einer Zeichenliste festgelegt. Abhängig vom verwendeten Fernmeldenetz, z.B. Fernsprech-oder Breitbandnetz, sowie von der Art der Fernmeldevermittlungsanlagen der Teilnehmerstationen oder sonstiger zentraler Netzeinrichtungen sind von einer Fernmeldevermittlungsanlage Zeichen mit unterschiedlichen Zeichengabeprotokollen auszuwerten.

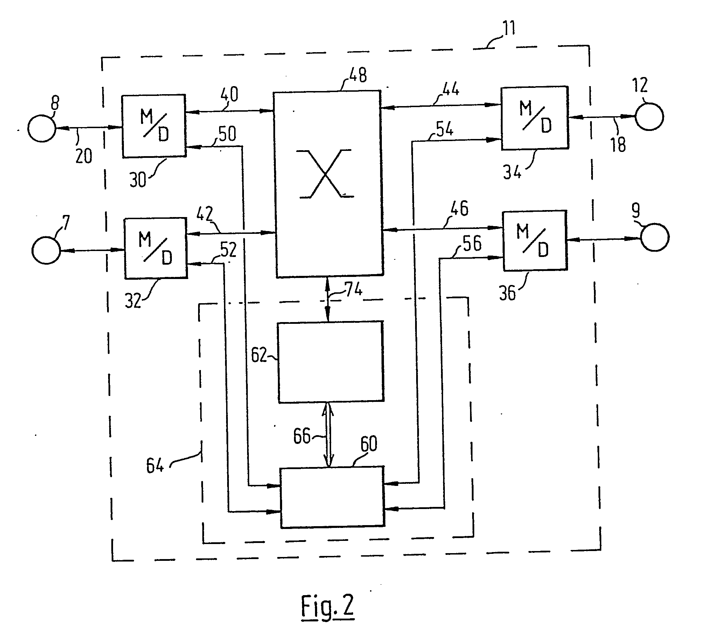

In Fig. 2 ist der prinzipielle Aufbau der digitalen Fernmeldevermittlungsanlage 11 dargestellt. Diese ist mit der Teilnehmerstation 8 über den Übertragungsabschnitt 20 und mit der übergeordneten Fernmeldevermittlungsanlage 12 über den Übertragungsabschnitt 18 sowie mit den Teilnehmerstationen 7 und 9 verbunden. Neben den genannten Anschlüssen ist eine Vielzahl weiterer Verbindungen zu Teilnehmerstationen oder Fernmeldevermittlungsanlagen vorhanden, die jedoch zur besseren Übersicht nicht dargestellt sind.

Die Übertragungsleitungen der Teilnehmerstationen 7, 8, 9 sowie der Übertragungsabschnitt 18 der Fernmeldevermittlungsanlage 12 sind an Multiplexer-Demultiplexer-Bausteine 30, 32, 34, 36 angeschlossen. Diese teilen die ankommenden Signale in Nutzsignale, zum Beispiel Sprache oder Daten, und in Zeichen auf. Die Nutzsignale werden über Leitungen 40, 42, 44, 46 einem Koppelfeld 48 zugeführt, das die Nutzsignale in bekannter Weise in der gewünschten Richtung weiterleitet.

Die Zeichen werden über Zeichengabekanäle 50, 52 , 54, 56 einem Vorverarbeitungsbaustein 60 zugeführt. In der Praxis sind entsprechend der Zahl der von der Fernmeldevermittlungsanlage zu vermittelnden Verbindungen zusätzlich zum Vorverarbeitungsbaustein 60 weitere Vorverarbeitungsbausteine vorgesehen, die in der Fig. 2 aus Gründen der besseren Übersicht weggelassen worden sind. Die Multiplexer-Demultiplexer-Bausteine 30, 32, 34, 36 arbeiten bidirektional, d.h. die von der Fernmeldevermittlungsanlage abgehenden Nutzsignale und Zeichen werden durch Multiplexen nach dem Zeitverschachtelungsprinzip wieder zu einem Signal zusammengesetzt und über jeweils einen Übertragungskanal an die Teilnehmerstationen 7, 8, 9 bzw.

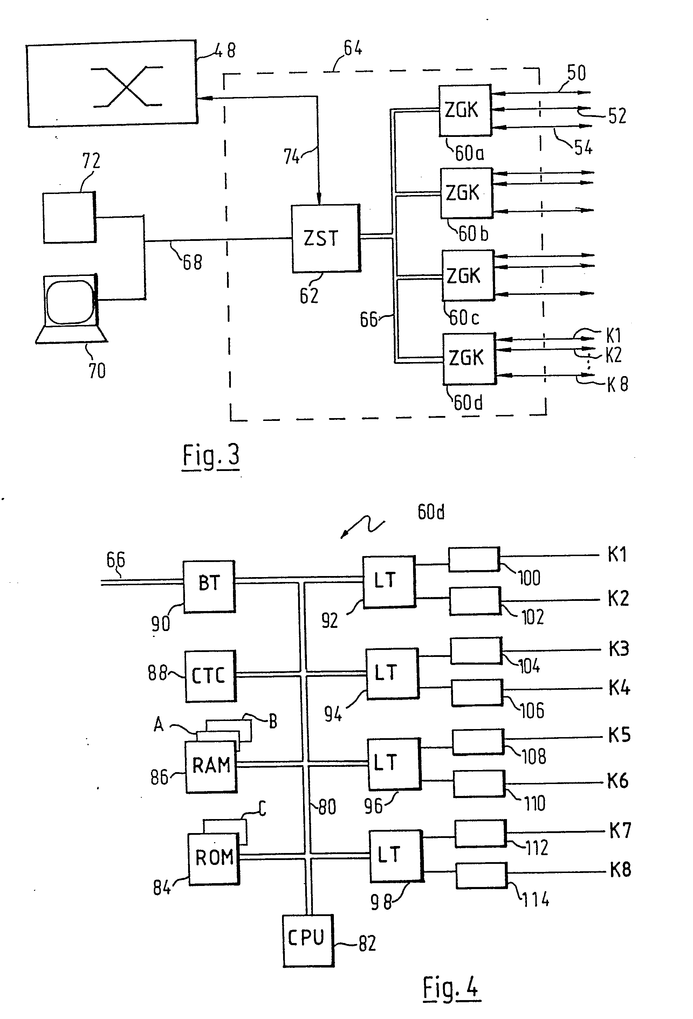

an die Fernmeldevermittlungsanlage 12 gesendet. Der Vorverarbeitungsbaustein 60 ist mit einer Steuereinrichtung 62 verbunden und tauscht mit dieser Daten aus. Die Steuereinrichtung 62 bildet zusammen mit mehreren Vorverarbeitungsbausteinen nach Art des Vorverarbeitungsbausteins 60 ein Steuersystem 64, das in Verbindung mit der Fig. 3 im folgenden näher erläutert wird.

Die Steuereinrichtung 62 ist über eine Steuerleitung 74 mit dem Koppelfeld 48 und über einen Datenbus 66 mit mehreren Vorverarbeitungsbausteinen 60a, 60b, 60C, 60d verbunden. An diese sind jeweils mehrere Zeichengabekanäle angeschlossen, beispielsweise an den Vorverarbeitungsbaustein 60a die Zeichengabekanäle 50, 52, 54 sowie an den Vorverarbeitungsbaustein 60d die Zeichengabekanäle K1 bis K8.

Die Steuereinrichtung 62 enthält einen Digitalrechner, der über einen Ein-/Ausgabekanal und eine Leitung 68 mit einem Systemterminal 70 sowie mit einem Massenspeicher 72 verbunden ist. Das Systemterminal 70 hat eine Eingabetastatur, über die ein Bediener Programme für die Steuereinheit 62 laden, starten und beenden oder durch andere Eingabebefehle steuernd auf das Steuersystem 64 einwirken kann.

Technische Einzelheiten des Vorverarbeitungsbausteins 60d sind in Fig. 4 in einem Blockschaltbild dargestellt. An einen Daten- und Adressbus 80 sind ein Mikroprozessor 82, ein Festwertspeicher 84, ein Arbeitsspeicher 86, ein Zeitgeber 88, ein Bustreiberbaustein 90 sowie vier Leitungstreiberbausteine 92, 94, 96, 98 angeschlossen. Letztere sind jeweils mit zwei Leitungsanpassungsschaltungen 100 bis 114 verbunden, an die acht Zeichengabekanäle K1 bis K8 angeschlossen sind. Der Bustreiberbaustein 90 bildet die Schnittstelle zwischen dem Daten- und Adressbus 80 des Vorverarbeitungsbausteins 60d und dem Datenbus 66 des Steuersystems 64 und dient dem Datentransfer zwischen diesem und der Steuereinheit 62.

Die Funktionsweise des Steuersystems 64 wird nunmehr anhand der Fig. 3 und 4 erläutert. Unter Steuerung durch die Steuereinheit 62 sowie den Mikroprozessor 82 wird über den Datenbus 66, den Bustreiberbaustein 90 sowie den Daten- und Adressenbus 80 ein Programm A oder B in den Arbeitsspeicher 86 nach einem noch zu beschreibenden Datenübertragungsverfahren geladen. Der Mikroprozessor 82 bedient sich hierzu eines Urladerprogramms C, das im Festwertspeicher 84 abgespeichert ist.

Die Zeichen der Zeichenkanäle K1 bis K8 gelangen über die Leitungsanpassungsschaltungen 100 bis 114 zu den Leitungstreiberbausteinen 92 bis 98, die die Zeichen in einem Speicher zwischenspeichern. Das Programm A bzw. B wird durch einen Steuerbefehl der Steuereinheit 62 gestartet, und die gespeicherten Zeichen werden im Zuge des Abarbeitens des Programms nach dem Prinzip der Zeitverschachtelung in vorgegebenen Zeitabschnitten in den Arbeitsspeicher 86 eingelesen und ausgewertet. Die Programme A und. B sind an das jeweilige Zeichengabeprotokoll der auf den einzelnen Zeichengabekanälen K1 bis K8 ankommenden und abgehenden Zeichen angepaßt, so daß die den Zeichen zugeordneten Funktionen ordnungsgemäß ausgeführt werden können. Zeichen, die den Verbindungsaufbau und den Verbindungsabbau steuern, wie beispielsweise Zeichen mit Wählinformation, mit Belegungsinformation oder mit Auslöseinformation, werden über den Adress- und Datenbus 80, den Bustreiberbaustein 90 sowie den Datenbus 66 an die Steuereinrichtung 62 weitergeleitet. Die zur Überwachung von Übertragungsabschnitten sowie zum Verbindungsaufbau für die Zeichenübertragung erforderlichen Zeichen wie beispielsweise Quittungssignale, Belegungsquittung, Auslösequittung etc., werden vom Mikroprozessor 82 selbständig ausgewertet. Bei dieser Auswertung werden durch den Vorverarbeitungsbaustein neue Zeichen gemäß dem Zeichengabeprotokoll generiert und über die Leitungstreiberbausteine 92 bis 98 und die Leitungsanpassungschaltungen 100 bis 114 über die Zeichengabekanäle K1 bis K8 ausgesendet. Die von der Steuereinrichtung 62 erzeugten Zeichen werden als Daten an den Vorverarbeitungsbaustein 60d übertragen und von diesem ebenfalls als Zeichen über die Zeichengabekanäle K1 bis K8 an die nachfolgenden Teilnehmerstationen oder Fernmeldevermittlungsanlagen ausgesendet.

Als Beispiel für die Funktionsweise des Vorverarbeitungsbausteins 60d soll die Überwachung von Übertragungsabschnitten durch Quittungssignale näher betrachtet werden. Hierzu wird in regelmäßigen Zeitabständen von einem Ende des Übertragungsabschnitts ein Lebenssignal ausgesendet, das den Übertragungsabschnitt durchläuft und an seinem anderen Ende innerhalb einer vorgegebenen Zeit mit einem entsprechenden Lebenssignal beantwortet wird. Die permanente Überwachung dieser Lebenssignale wird vom Mikroprozessor 82 mit Unterstützung des Zeitgebers 88 durchgeführt. Die Lebenssignale zwischen Fernmeldevermittlungsanlagen bzw. zwischen einer Fernmeldevermittlungsanlage und einer Teilnehmerstation werden auch dann ausgetauscht, wenn keine Nutzinformation auf dem überwachten Übertragungsabschnitt übertragen wird, um so eine fehlerhafte Verbindung bereits vor der Übertragung von Nutzsignalen zu erkennen. Es ist leicht einzusehen, daß zur Überwachung vieler Übertragungsabschnitte ein erheblicher Anteil an Rechenzeit aufzuwenden ist. Durch die Verlagerung des Rechenaufwandes hin zu den Vorverarbeitungsbausteinen 60a bis 60d, wird die Steuereinrichtung 62 weniger beansprucht, so daß sie ihrem eigentlichen Zweck der Vermittlung von Verbindungen auch bei einer großen Zahl von Anschlüssen nachkommen kann, ohne daß auf Überwachungsmaßnahmen verzichtet werden muß.

Empfängt der Vorverarbeitungsbaustein 60d von der anderen Seite des Übertragungsabschnitts keine Lebenssignale mehr, so sendet er in sogenannten Wiederholungsprozeduren ein oder mehrere Lebenssignale aus. Stellt der Vorverarbeitungsbaustein 60d dabei fest, daß auf dem überwachten Übertragungsabschnitt eine Störung vorliegt, so wird an die Steuereinrichtung 62 eine Meldung abgegeben. Die Steuereinrichtung 62 kann daraufhin die gestörte Verbindung abbrechen oder einen neuen ungestörten Verbindungsweg aufbauen.

Die Vorverarbeitungsbausteine 60a bis 60d sind als Steckkartenmodule aufgebaut. Bei der Erweiterung bestehender Fernmeldevermittlungsanlagen um weitere Verbindungen werden entsprechend viele zusätzliche Vorverarbeitungsbausteine mit bereits vorhandenen Anschlüssen mit Steckplätzen verbunden, denen die zusätzlichen Zeichengabekanäle zugeführt werden. Durch diese einfache Maßnahme kann die Gesamtkapazität des Steuersystems erhöht und damit die Leistungsfähigkeit der Fernmeldevermittlungsanlage gesteigert werden.

Das Steuersystem ist auch in der Lage, Zeichen mit verschiedenartigen Zeichengabeprotokollen zu verarbeiten, die von verschiedenartigen Teilnehmerstationen oder Fernmeldevermittlungsanlagen verwendet werden. Für jedes Zeichengabeprotokoll ist hierzu jeweils ein Programm, z.B. das Programm A oder B vorgesehen, das bedarfsabhängig von der Steuereinrichtung 62 in den Arbeitsspeicher 86 geladen wird. Das Laden der den verschiedenen Zeichengabeprotokollen zugeordneten Programme wird entweder manuell durch eine Bedienperson über die Steuertastatur des Systemterminals 70 oder durch Auswertung von Betriebszuständen, die auf einen Programm- oder Ablauffehler hinweisen, veranlaßt (Watchdog-Prinzip). Dies kann während des Betriebes der Anlage erfolgen.

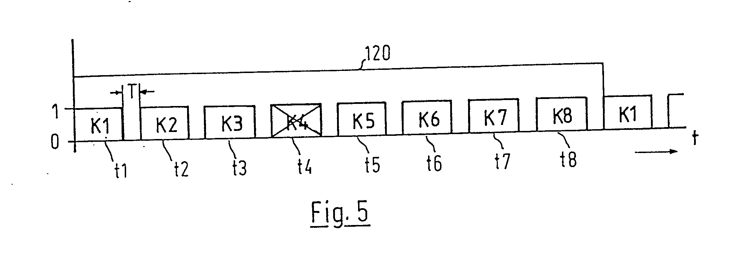

Wie bereits erwähnt, erfolgen der Datenverkehr zwischen dem Vorverarbeitungsbaustein 60d und der Steuereinrichtung 62 sowie die Auswertung der Zeichen der Zeichengabekanäle K1 bis K8 nach dem Prinzip der Zeitverschachtelung. In Fig. 5 ist diese Verschachtelung über der Zeit t in einem Diagramm dargestellt. Die Bezeichnungen 0 bzw. 1 auf der Ordinate des Diagramms bedeuten, daß Zeichen der Zeichengabekanäle K1 bis K8 in bestimmten Zeitabschnitten t1 bis t8 ausgewertet bzw. nicht ausgewertet werden. Die einzelnen Zeitabschnitte t1 bis t8 werden durch den Zeitgeber 88 gesteuert. Zwischen den einzelnen Zeitabschnitten t1 bis t8 sind Zeitabschnitte T vorgesehen, in denen ein Datenaustausch zwischen der Steuereinheit 62 und dem Vorverarbeitungsbaustein 60d durchgeführt wird, beispielsweise um Meldungen und Steuersignale zu übertragen. Die Summe der einzelnen Zeitabschnitte T und t1 bis t8 ergibt einen festen Zeitrahmen 120, der zyklisch wiederholt wird.

Wenn beim laufenden Betrieb ein neues Programm zu laden ist, weil sich z.B. das Zeichengabeprotokoll eines Zeichengabekanals K1 bis K8 geändert hat, so wird zum Laden der Zeitabschnitt des betroffenen Zeichengabekanals herangezogen. Soll zum Beispiel dem Zeichengabekanal K4 ein neues Programm zugewiesen werden, so veranlaßt die Steuereinrichtung 62 durch einen Steuerbefehl das Beenden des im Zeitabschnitt t4 gerade laufenden Programms. Anschließend wird in diesem Zeitabschnitt t4 ein neues Programm geladen und nach Ende des Ladevorgangs gestartet. Das Laden kann sich über mehrere Zeitrahmen 120 erstrekken. Durch diese Vorgehensweise wird der Betrieb des Vorverarbeitungsbausteins 60d nur geringfügig beeinträchtigt, da die Auswertung der Zeichen der restlichen Zeichengabekanäle nicht unterbrochen wird.

## Ansprüche

1. Steuersystem für eine digitale Fernmeldevermittlungsanlage zur Steuerung des Verbindungsaufbaus und des Verbindungsabbaus zwischen Teilnehmerstationen und/oder Vermittlungsanlagen sowie zur Verbindungsüberwachung durch Auswerten digitaler Zeichen, die zwischen den Teilnehmerstationen und/oder Vermittlungsanlagen und einer Steuereinrichtung über mindestens einen Zeichengabekanal ausgetauscht werden, dadurch **gekennzeichnet,** daß der Steuereinrichtung (62) zur programmgesteuerten Überwachung mehrerer Verbindungseigenschaften Vorverarbeitungsbausteine (60, 60a bis 60 d) vorgeschaltet sind, die an die Steuereinrichtung (62) den Verbindungszustand betreffende Meldungen abgeben.

2. Steuersystem nach Anspruch 1, dadurch **gekennzeichnet,** daß das Laden des für die Verbindungsüberwachung benötigten Programms (A, B) durch die Steuereinrichtung (62) gesteuert wird.

3. Steuersystem nach Anspruch 1 oder 2, dadurch **gekennzeichnet,** daß bei Zeichengabekanälen (K1 bis K8) mit unterschiedlichen Zeichegabeprotokollen für die Zeichen für jedes Zeichengabeprotokoll jeweils ein Programm (A, B) vorgesehen ist, das abhängig vom verwendeten Zeichengabeprotokoll geladen und abgearbeitet wird.

4. Steuersystem nach einem der Ansprüche 1 bis 3,

dadurch **gekennzeichnet,**

daß der Vorverarbeitungsbaustein (60, 60a bis 60d) und die Steuereinrichtung (62) über einen Datenbus (66) verbunden sind.

5. Steuersystem nach einem der Ansprüche 1 bis 4,

dadurch **gekennzeichnet,**

daß mehrere Vorverarbeitungsbausteine (60a bis 60d) zu einem Signalisierungsbaustein zusammengefaßt sind, der von einem Mikroprozessor (82) gesteuert wird.

6. Steuersystem nach Anspruch 5,

dadurch **gekennzeichnet,**

daß bei mehreren an einen Signalisierungsbaustein angeschlossenen Zeichengabekanälen (K1 bis K8) jedem Zeichengabekanal (K1 bis K8) ein vorbestimmter Zeitabschnitt (t1 bis t8) in einem festen Zeitrahmen (120) zugeordnet ist, in dem die Zeichen ausgewertet bzw. an die Steuereinrichtung (62) weitergeleitet werden.

7. Steuersystem nach Anspruch 6, dadurch gekennzeichnet, daß das Laden eines einem Zeichengabekanal (K1 bis K8) zugeordneten Programms (A, B) während des Zeitabschnitts (t1 bis t8) des betreffenden Zeichengabekanals (K1 bis K8) durchgeführt wird.

8. Steuersysten nach einem der Ansprüche 1 bis 7,

dadurch **gekennzeichnet,**

daß dem Vorverarbeitungsbaustein (60, 60a bis 60d) mindestens ein Leitungstreiberbaustein (92 bis 98) vorgeschaltet ist, der die Zeichen mindestens eines Zeichengabekanals (K1 bis K8) zwischenspeichert.

9. Steuersystem nach einem der Ansprüche 6 bis 8,

dadurch **gekennzeichnet,**

daß die Steuereinrichtung (62) in festgelegten Zeiten (T) zwischen den Zeitabschnitten (tl bis t8) Steuersignale an den Vorverarbeitungsbaustein (60, 60a bis 60d) abgibt, die das Laden, das Starten oder das Beenden der Programme (A, B) steuern.

10. Steuersystem nach einem der vorhergehenden Ansprüche,

dadurch **gekennzeichnet,**

daß das Programm in mehrere Programmteile gegliedert ist, die jeweils einem Zeichengabeprotokoll zugeordnet sind.

EBENE n

EBENE 3

EBENE 2

EBENE 1

<u>Fig.1</u>

Fig.2

Fig.3

Fig.4

Fig. 5